# EUROPEAN PATENT SPECIFICATION

(11) **EP 0 707 754 B1**
(45) Date of publication and mention of the grant of the patent: **17.09.1997**
(21) Application number: 94919771.9
(22) Date of filing: 06.07.1994
(51) Int. Cl.: H02K 7/02, H01K 1/02, B60K 6/06

(54) **ENERGY STORAGE AND CONVERSION DEVICES**
VORRICHTUNG ZUM UMWANDELN UND SPEICHERN VON ENERGIE
DISPOSITIFS DE STOCKAGE ET DE CONVERSION D'ENERGIE

(30) Priority: 06.07.1993 GB 9313926
(43) Date of publication of application: 24.04.1996
(73) Proprietor: British Nuclear Fuels PLC, Risley Warrington Cheshire, WA3 6AS (GB)
(72) Inventor: JENNINGS, Howard Timothy, Risley Warrington Cheshire WA3 6AS (GB); COX, Terence Martin, British Nuclear Fuels plc, Warrington Cheshire WA3 6AS (GB)
(74) Representative: Jackson, Richard Eric
(86) International application number: GB9401460
(87) International publication number: WO9502271

(56) References cited:
- DE-A- 2 050 108
- FR-A- 2 204 916
- FR-A- 2 292 155
- FR-A- 2 614 367
- US-A- 4 529 900
- US-A- 4 870 310
- 'PROCEEDINGS OF THE 26TH INTERSOCIETY ENERGY CONVERSION ENGINEERING CONFERENCE (IECEC)' 16 October 1992 , NEW YORK, IEEE. ; US , LA GRANGE PARK, ILLINOIS USA , XP000312818 Flywheel energy storage for electric utility load leveling, by M.A. Higgins et al see page 210, left column, line 6 - page 210, right column, line 63 see page 212, left column, line 31 - line 39; figures 2,6
- PATENT ABSTRACTS OF JAPAN vol. 7, no. 74 (M-203) (1219) 26 March 1983 & JP,A,58 000 650 (MORIYAMA) 5 January 1983
- PATENT ABSTRACTS OF JAPAN vol. 10, no. 228 (E-426) (2284) 8 August 1986 & JP,A,61 062 342 (MITSUBISHI ELECTRIC) 31 March 1986
- SCIENTIFIC AMERICAN, vol. 229, no. 6, Dec. 1973, New York (US), pages 17-23, R.P. Post et al., "Flywheels"

## Description

The present invention relates to energy storage and conversion devices.

Flywheels are well known devices which can receive and store energy as kinetic energy and can release energy for conversion into other forms when required by a user system. In the prior art a number of flywheel systems are known in which the flywheel comprises a rotor in an electric motor/generator system. Examples of such systems are described in prior patent specifications EP0191225B, FR2614367 and US5124605. In such systems the means employed for constructing the rotor, mutually arranging the rotor to rotate relative to the stator of the motor/generator and suspending the rotor, when rotating, relative to the stator are not ideal.

FR-A-2204916 discloses a fibre-reinforced composite rotor incorporating a magnetic material to enable the rotor to be driven without the need for separate rotor magnets.

According to US-A-4870310, there is provided an energy conversion and storage device which comprises a magnetic rotor and a stator comprising one or more electric coils whereby electrical energy may be applied to and extracted from the device when the rotor is rotating relative to the stator and means for electromagnetically suspending the rotor whilst rotating relative to the stator, wherein the rotor comprises a body portion formed of a composite of fibre reinforced material and the stator is disposed inside the rotor co-axially with the rotor.

In the light of the foregoing, the present invention is characterised in that the body portion of the rotor is tubular and has a length along its axis which is greater than its widest diameter; magnetic material is embedded within the fibre reinforced material of the body portion of the rotor; and the stator extends along at least a major part of the length of the said body portion of the rotor.

Preferably the length of the body portion desirably faces the stator over at least 90 per cent of the length of the stator.

The body portion of the rotor may be formed in the manner described in Applicant's copending Patent Application WO 94/06193 entitled 'A Fibre-Reinforced Rotor' wherein magnetic material is disposed within and between layers of reinforcing fibres in fibred reinforced plastics material. As described in the said Application, the magnetic material is desirably a material which can be obtained in powder form and which can be magnetised by high magnetic fields, eg hard magnetic materials. Desirably, the magnetic material is resistant to demagnetising forces. The magnetic material may be a rare earth doped magnetic material, eg cobalt-samarium or neodymium-boron. The fibre reinforced material may comprise a known fibre reinforced polymeric material the polymeric matrix of which may be a cold setting, thermosetting or thermoplastic material or a mixture of these. The polymeric material may comprise one or more of epoxy resins, polyester resins, Friedel Crafts resins, polyimides, polyether sulphones, and polyether ketones (PEEK) optionally together with known additives such as hardeners, fillers, anti-oxidants and the like. The reinforcing fibres may comprise one or more of carbon, glass, boron, polyamide, polyaramid and polyolefin fibres.

The loading of the magnetic material within the fibre reinforced material may, as described in copending UK Patent Application 9313943.4 by the present Applicant, vary throughout the matrix of the fibre reinforced material whereby the average mass per unit volume of the rotor body portion decreases radially with distance from the axis of the structure.

As described in WO 94/06193, the rotor body portion preferably comprises an initial layer of windings of fibres, at least one intermediate layer of windings of fibres superimposed about the initial layer define helical spaces therebetween, magnetic filler material in the spaces, and an outer layer of windings of fibres superimposed about the intermediate layer(s).

Such a rotor may be manufactured by a method including the steps of:
a) winding onto a mandrel an initial layer comprising fibres by a thermosetting resin;
b) winding at least one intermediate layer comprising resin-impregnated fibres about the initial layer so as to define spaces between the fibres of the intermediate layer;
c) disposing a mixture comprising unmagnetised magnetic filler material and a resin matrix material in the spaces;
d) winding an outer layer comprising uncured resin-impregnated fibres about the intermediate layer;
e) applying a magnetic field to align the magnetic material in a required orientation whilst the resin is in the liquid state prior to gelling and during the gelling process;
f) curing the resin, and
h) magnetising the magnetic filler material with an electric coil.

The stator in the device according to the present invention may be formed using a substrate comprising a die cast or sintered or extruded or moulded tube or cylinder. The substrate may comprise ironless metallic or polymeric material. The substrate may contain no magnetic material or alternatively may comprise non-magnetic material coated with powdered iron-containing or other magnetic material or laminate structure comprising alternate layers which incorporate magnetic and non-magnetic materials. The electric coil(s) may be applied to the substrate during the manufacture of the substrate or afterwards. The electric coil(s) may be formed on the substrate by any suitable known technique such as welding, chemical bonding or by deposition by printing eg using photolithographic techniques. The coil(s) may be printed for example using copper.

Desirably, the coils of the stator are able to accept very high currents. Avoidance of iron in the stator may assist in such acceptance. However, ironless stators are inefficient. The stator may have means associated therewith by which iron, eg particles, suspended in a pumpable fluid, eg an inert oil, may be injected into or removed from a cavity within the stator whereby the permeability of the stator may be varied according to the required state of energisation of the device.

The rotor and stator in the device according to the present invention are desirably contained in an enclosure defining a chamber which may be evacuated preferably to a high vacuum state, eg 10⁻⁴ Nm⁻² (10⁻⁶ Torr), during use to minimise molecular drag upon the rotor and the parasitic energy losses produced thereby. The chamber may include an arrangement by which residual molecules may be accelerated toward and through a semi-permeable membrane and trapped in a region of the chamber behind the membrane to assist develop and maintain the vacuum. The membrane may comprise a microporous material which allows gas molecules eg O₂, N₂ and CO₂ through at high speed but does not allow back transmission at low speeds.

The semi-permeable membrane may be provided in the space between the rotor and the enclosure inner wall. Such a membrane may be penetrated in use by residual gas molecules projected toward the membrane by the rotary action of the rotor and thereafter trapped in the region between the membrane and the enclosure inner wall. The membrane may conveniently be corrugated to increase the probability of molecules being projected through the membrane.

The device according to the present invention may include a hollow conduit through which coolant fluid may be passed to remove heat generated during use. The conduit may comprise a hollow shaft located substantially on the axis of the stator and may extend between the respective facing end walls of the enclosure. The coolant may comprise water, air, alcohol or another suitable medium which may be pumped through the hollow conduit.

The said enclosure may be a casing, eg 5mm to 50mm thick, formed using high strength aluminium or an alloy thereof optionally reinforced with fibre over-windings eg of polyaramid. The inner wall of the enclosure may comprise means to arrest the material of the rotor in the event that the rotor crashes into the enclosure following malfunction during use. The said casing inner walls may carry skid rings or may contain a charge of a material which absorbs kinetic energy by changing its state, eg a liquid such as water which is vaporised, or a solid such as vermiculite.

In order to detect an impending failure of the rotor in the device according to the present invention the device may include means for monitoring the temperature in the said chamber or of the rotor and/or by monitoring the stress patterns developed in the body of the rotor. Fibre-optic guides may be used in a known way to monitor remotely temperatures or stress patterns of the rotor. Where the detected temperature or detected stress level is unacceptably high the input electrical energy may be automatically shut-off whereby the speed of the rotor is allowed to fall to an acceptable level.

The rotor may include embedded therein one or more fibre optic light guides and light signals may be passed through the guide(s) from a light source, eg semiconductor laser communicating with the guide, and detected at the other end by a photodetector eg photodiode, the source and detector being statically positioned outside the rotor. Differences in length of the fibre caused by raised temperatures and/or stresses within the rotor may be detected by timing the light travelling along the guide or by measuring changes in its dispersion or absorption caused by changes in properties eg, refractive index, of the guide material.

The coil(s) of the stator may be connected to an external switching circuit which allows the device according to the present invention to function as an electric motor, the switching circuit allowing input electrical energy to be applied to the coils to be stored as kinetic energy by the rotor. When the device functions as a generator the switching circuit allows electrical energy to be extracted from the coils. Where impending failure of the rotor is detected, the kinetic energy of the rotor may be rapidly extracted by switching of the device to its generator mode and by connection of the coils of the stator to a high resistance electrical load.

The said tubular body portion of the rotor may comprise a tube which is a right circular cylinder of uniform cross-section although it could also comprise a tube whose cross-sectional area varies along its length or part of its length eg at its end regions only. The said body portion may have a single frusto-conical envelope or back-to-back frusto-conical envelope portions in longitudinal cross-sectional. Alternatively, the said portion may have a longitudinal cross-sectional shape in which the outer diameter is constant but the inner diameter varies either from one end of the body portion to the other or from the ends to the central region of the body portion. Desirably, the gap between the rotor and stator is substantially constant along the length of the said body portion of the rotor even when the cross-sectional area of the latter varies. Desirably, the arrangement of the rotor and stator is such that the magnetic fields generated in use between the two extend substantially orthogonally to the axis of the rotor.

The said means for electromagnetically suspending the rotor may comprise electromagnets which desirably constitute active electromagnetic bearings. The rotor may incorporate ferromagnetic material, eg soft iron, at its peripheral regions facing the said electromagnet to facilitate the production of suitable suspension control forces between the electromagnets and the rotor.

Desirably, the active electromagnetic bearings are transducerless. Such bearings and the servo-control loops to stabilise the suspension produced thereby are described in our copending patent applications EP549,911A and EP549,912A. The device may comprise feedback means from the output circuit to the power inputs of the electromagnetic bearings whereby energy derived from the rotor is employed to power the electromagnets of the bearings.

The rotor and the stator may further include magnet, eg soft iron, portions facing one another which are of similar polarity whereby the portions provide passive magnetic bearings for suspension of the rotor at low speeds.

The form and construction of the rotor in the device according to the present invention is unexpectedly advantageous compared with the prior art. In those prior art designs in which the flywheel is attached to spokes radially extending from a hub, where bearings are located, it is difficult to obtain strain matching of the spokes and this has required complex and expensive solutions. A substantial part of the mass of the flywheel is near to the axis of the flywheel. Use of a tubular rotor allows bearings to be employed at the ends of the rotor rather than at its centre and avoids the use of undesirable spokes. The rotating mass when in the form of a tubular rotor constituting the flywheel can beneficially have its mass concentrated away from the axis. By incorporating magnetic material in the resin matrix of the fibre-reinforced material the electromagnetic interaction between the rotor and stator can be efficiently maintained along the length of the body portion (at least) of the rotor and out of balance regions in the high speed rotating mass can be avoided.

The device according to the present invention may be employed in a vehicle propulsion system. In use, kinetic energy from the motion of the vehicle and/or its suspension system is converted into kinetic energy by the device operating in its motor mode. In an extreme situation where a vehicle brakes hard a power input of typically up to 200 kW may be obtained. In due course, the device may be switched to its generator mode whereby kinetic energy stored by the rotor is extracted as output electrical energy. The electrical energy may be reconverted into mechanical energy in a device connected to a user system, eg a brushless d.c. motor. The output extracted waveform from the generator may be converted in a known way, eg by smoothing, so that it is suitable for acceptance by the said device.

Embodiments of the present invention will now be described by way of example with reference to the accompanying drawings, in which:
Figure 1 is a sectional elevation of a rotor flywheel arrangement.
Figure 2 shows in longitudinal section an alternative form of rotor and stator for use in the arrangement shown in Figure 1;
Figure 3 shows in longitudinal section a further alternative form of the rotor and stator for use in the arrangement shown in Figure 1.
Figure 4 shows a partial transverse section of the arrangement shown in Figure 1 including the additional feature of a semi-permeable membrane.

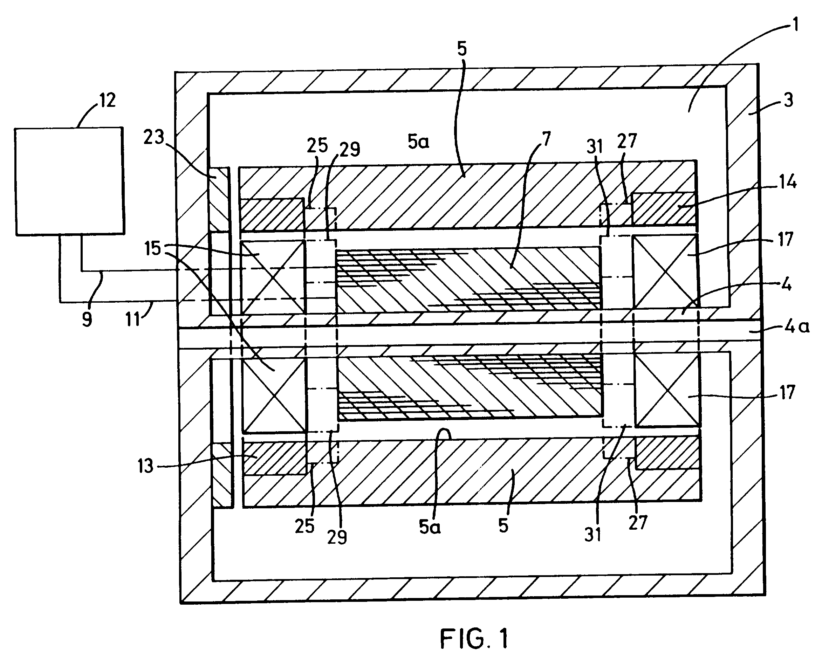

As shown in Figure 1, a vacuum chamber 1 is enclosed by a drum shaped casing 3. A tubular shaft 4 is fitted between the ends of the casing 3 and extends along the axis of the casing 3. A cylindrical tubular rotor 5 is suspended in the chamber 1 co-axial with the tubular shaft 4. The rotor 5 comprises a fibre reinforced composite material and a magnetic material for example cobalt samarium. A stator 7 is mounted on the shaft 4 between the shaft 4 and the rotor 5. The stator 7 comprises a magnetic core (which may be laminated in a known way) and also one or more electrical coils in contact with the core which coils are connected to conducting leads two of which, leads 9 and 11, have insulating coatings (not shown) are shown fitted through one end of the casing 3 and lead to an external circuit 12.

The rotor 5 incorporates at its ends rings 13, 14 of soft iron whose inner surfaces form part of the inner surface 5a of the rotor 5 facing the stator 7. Electromagnet systems 15, 17 are mounted on the shaft 4 adjacent to the ends of the stator 7 and face the rings 13, 14 respectively. Each electromagnet system comprises a common rectangular cross-sectional magnetic core ring and four active coils mounted equiangularly around the core ring. Each coil is connected to external conducting leads (not shown) which are in turn connected to external circuits (not shown) which energise the coils of the electromagnet systems 15, 17. The external circuits also monitor and detect parameters which provide servo-control of the suspension of the electromagnet systems 15, 17 relative to the iron rings 13, 14 in the manner described in our EP 549,911A and EP 549,912A. The electromagnet systems 15, 17 and the rings 13, 14 thereby provide radial active magnetic bearing suspension of the rotor 5 about the stator 7. An active magnetic bearing system 23 adjacent to the end of the rotor 5 provides a thrust bearing which locates the rotor 5 in its required longitudinal position along the axis of the shaft 4.

Magnetic rings 25, 27 formed on the inner surface of the rotor 5 may be optionally provided facing magnetic rings 29, 31 of similar polarity (as the rings they face) on the outer surface of the stator 7. The rings 25, 27, 29, 31 provide passive magnetic bearings to suspend the rotor 5 at low speeds.

Heat generated within the arrangement shown in Figure 1 may be removed by passing a coolant, eg water, along the inside 4a of the tubular shaft 4.

In use, the arrangement shown in Figure 1 may operate in either an electric motor or an electric generator mode. When the arrangement is acting as a motor the circuit 12 is switched whereby electrical energy is provided as an input to the coils of the stator 7 whereby the rotor 5 is caused to rotate. The rotational speed of the rotor 5 may be very high, eg 100,000 to 200,000 revolutions per minute. When the arrangement is acting as a generator the rotation of the rotor 5 causes induction of an electromotive force providing a voltage in the coils of the stator 7 which is extracted as external electrical energy via the circuit 12. The extracted voltage waveform may be converted in a known way, eg by smoothing, to a form which is suitable for use in an external load, eg a brushless dc motor.

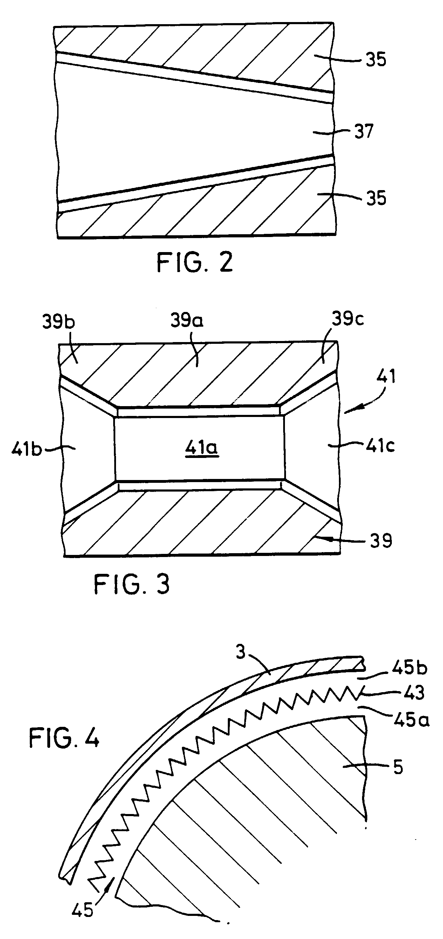

Alternative geometrical forms for the rotor and stator are shown in Figures 2 and 3. In Figure 2 the rotor 5 and stator 7 of Figure 1 are replaced by a rotor 35 and stator 37. The other components of the device are not shown. The rotor 35 comprises a tubular cylinder whose transverse cross-sectional area increases along the length of the rotor 35 (from left to right as shown in Figure 2). The transverse cross-sectional area of the stator 37 shows a corresponding decrease along its length whereby the gap between the rotor 35 and stator 37 is substantially constant along the length of the rotor 35.

In Figure 3 the rotor 5 and stator 7 of Figure 1 are replaced by a rotor 39 and stator 41. The other components of the device are not shown. The rotor 39 comprises a tubular cylinder whose transverse cross-sectional area is constant in the central portion 39a of the rotor 39 but which decreases toward the respective ends of the rotor 39 in regions 39b, 39c. The stator 41 correspondingly is of uniform transverse cross-sectional area in the central region 41a adjacent to the region 39a of the rotor 39 but increases toward the respective ends of the stator 41 in regions 41b, 41c adjacent to the regions 39b, 39c of the rotor 39 whereby the gap between the rotor 39 and stator 41 is substantially constant along the length of the rotor 39.

Figure 4 shows an arrangement whereby residual gas molecules in the chamber 1 (cf. Figure 1) may be removed to reduce parasitic energy losses. A corrugated microporous membrane 43 is located in a space 45 of annular cross-section between the rotor 5 and the casing 3.

In use gas molecules in a region 45a of the space 45 are flung by the rotor 5 toward the membrane 43 and, by their own momentum, penetrate the membrane 43 to reach a region 45b behind the membrane where they become trapped.

## Claims

1. An energy conversion and storage device which comprises a magnetic rotor (5) and a stator (7) comprising one or more electric coils whereby electrical energy may be applied to and extracted from the device when the rotor (5) is rotating relative to the stator (7) and means (15,17) for electromagnetically suspending the rotor (5) whilst rotating relative to the stator (7), wherein the rotor (5) comprises a body portion formed of a composite of fibre reinforced material and the stator (7) is disposed inside the rotor (5) co-axially with the rotor (5); characterised in that the body portion of the rotor (5) is tubular and has a length along its axis which is greater than its widest diameter; magnetic material is embedded within the fibre reinforced material of the body portion of the rotor (5); and the stator (7) extends along at least a major part of the length of the said body portion of the rotor (5).

2. A device as in claim 1 and wherein the length of the body portion faces the stator (7) over at least 90 per cent of the length of the stator (7).

3. A device as in claim 1 or claim 2 and wherein the stator (7) is formed using a substrate comprising a die cast or sintered or extruded or moulded tube or cylinder, the substrate comprising ironless metallic or polymeric material.

4. A device as in claim 1, 2 or 3 and wherein the stator (7) has means associated therewith by which iron particles suspended in a pumpable fluid may be injected into or removed from a cavity within the stator whereby the permeability of the stator (7) may be varied according to the required state of energisation of the device.

5. A device as in any preceding claim and wherein the rotor (5) and stator (7) are contained in an enclosure (3) defining a chamber (1) which may be evacuated to a high vacuum state during use to minimise molecular drag upon the rotor (5) and the parasitic energy losses produced thereby.

6. A device as in claim 5 and wherein the chamber (1) includes an arrangement by which residual molecules may be accelerated toward and through a semi-permeable membrane (43) and trapped in a region (45b) of the chamber (1) behind the membrane (43) to assist, develop and maintain the vacuum.

7. A device as in claim 6 and wherein the membrane (43) comprises a microporous material which allows gas molecules through at high speed but does not allow back transmission at low speeds.

8. A device as in claim 6 or claim 7 and wherein the semi-permeable membrane (43) is provided in the space between the rotor (5) and the enclosure (3) inner wall whereby the membrane (43) may be penetrated in use by residual gas molecules projected toward the membrane (43) by the rotary action of the rotor (5) and thereafter trapped in the region between the membrane (43) and the enclosure (3) inner wall.

9. A device as in claim 8 and wherein the membrane (43) is corrugated to increase the probability of molecules being projected through the membrane (43).

10. A device as in any one of the claims 5 to 9 and wherein the device includes a hollow conduit (4a) through which coolant fluid may be passed to remove heat generated during use.

11. A device as in claim 10 and wherein the conduit (4a) comprises a hollow shaft (4) located substantially on the axis of the stator (7) and extending between the respective facing end walls of the enclosure (3).

12. A device as in any one of claims 5 to 11 and wherein the inner wall of the enclosure (3) comprises means to arrest the material of the rotor (5) in the event that the rotor (5) crashes into the enclosure following malfunction during use.

13. A device as in any one of the preceding claims and wherein in order to detect an impending failure of the rotor (5) in the device, the device includes means for monitoring the temperature in the said chamber (1) or of the rotor (5) and/or for monitoring the stress patterns developed in the body of the rotor (5).

14. A device as in claim 13 and wherein fibre-optic guides are used to monitor remotely temperatures or stress patterns of the rotor (5).

15. A device as in any one of the preceding claims and wherein the coil or coils of the stator (7) are connected to an external switching circuit (12) which allows the device to function alternatively as an electric generator or an electric motor, the switching circuit (12) allowing input electrical energy to be applied to the coils to be stored as kinetic energy by rotor (5).

16. A device as in any one of the preceding claims and wherein the said tubular body portion of the rotor (35,39) comprises a tube whose cross-sectional area varies along its length or part of its length.

17. A device as in any one of the preceding claims and wherein the gap between the rotor and stator is substantially constant along the length of the said body portion of the rotor (5,35,39).

18. A device as in any one of the preceding claims and wherein the arrangement of the rotor (5) and stator (7) is such that the magnetic fields generated in use between the two extend substantially orthogonally to the axis of the rotor (5).

## Patentansprüche

1. Energieumwandlungs- und Speichervorrichtung, die aufweist einen magnetischen Rotor (5) und einen Stator (7), aufweisend eine oder mehrere elektrische Spulen, wodurch elektrische Energie aufgebracht werden kann auf und abgezogen werden kann von der Vorrichtung, wenn der Rotor (5) sich relativ zu dem Stator (7) dreht, und eine Einrichtung (15, 17) zum elektromagnetischen Aufhängen des Rotors (5), während er sich relativ zu dem Stator (7) dreht, wobei der Rotor (5) einen Körperabschnitt aufweist, der gebildet ist aus einem Komposit aus faserverstärktem Material und der Stator (7) angeordnet ist innerhalb des Rotors (5) koaxial mit dem Rotor (5), dadurch gekennzeichnet, daß der Körperabschnitt des Rotors (5) rohrförmig ist und eine Länge längs seiner Achse hat, die größer ist als sein breitester Durchmesser; das magnetische Material eingebettet ist in dem faserverstärkten Material des Körperabschnitts des Rotors (5); und der Stator (7) sich längs wenigstens eines Hauptteils der Länge des Körperabschnitts des Rotors (5) erstreckt.

2. Vorrichtung nach Anspruch 1 und wobei die Länge des Körperabschnitts dem Stator (7) gegenüber liegt über wenigstens 90 Prozent der Länge des Stators (7).

3. Vorrichtung nach Anspruch 1 oder Anspruch 2, wobei der Stator (7) gebildet ist unter Verwendung eines Substrats, das eine Gußform oder ein gesintertes oder extrudiertes oder geformtes Rohr oder Zylinder aufweist, wobei das Substrat ein eisenfreies metallisches oder polymeres Material aufweist.

4. Vorrichtung nach Anspruch 1, 2, oder 3 und wobei der Stator (7) eine mit ihm verbundene Einrichtung hat, durch die Eisenteilchen, die in einem pumpbaren Fluid suspendiert sind, eingespritzt werden können in oder entfernt werden können von einer Kavität in dem Stator, wodurch die Permeabilität des Stators (7) verändert werden kann gemäß dem erforderlichen Einschaltzustand der Vorrichtung.

5. Vorrichtung nach einem vorhergehenden Anspruch und wobei der Rotor (5) und Stator (7) enthalten sind in einer Einfassung (3), die eine Kammer (1) definiert, die evakuiert werden kann auf einen Hochvakuum-Zustand während der Verwendung, um einen Molekularwiderstand auf dem Rotor (5) und die dadurch erzeugten Parasitärenergieverluste zu minimieren.

6. Vorrichtung nach Anspruch 5 und wobei die Kammer (1) eine Anordnung aufweist, durch die übrige Moleküle beschleunigt werden können in Richtung auf und durch eine semipermeable Membran (43) und eingesperrt werden in einer Region (45b) der Kammer (1) hinter der Membran (43), um das Vakuum zu unterstützen, zu entwickeln und aufrechtzuerhalten.

7. Vorrichtung nach Anspruch 6 und wobei die Membran (43) aufweist ein mikroporöses Material, das den Durchgang von Gasmolekülen in hoher Geschwindigkeit ermöglicht, jedoch nicht die Rückübertragung unter geringen Geschwindigkeiten ermöglicht.

8. Vorrichtung nach Anspruch 6 oder Anspruch 7 und wobei die semipermeable Membran (43) vorgesehen ist in dem Raum zwischen dem Rotor (5) und der Einfassungs (3)-Innenwand, wodurch die Membran (43) durchdrungen werden kann im Gebrauch durch übrige Gasmoleküle, die auf die Membran (43) durch die Drehwirkung des Rotors (5) geschleudert werden und danach in dem Bereich zwischen der Membran (43) und der Einfassungs (3)-Innenwand eingeschlossen sind.

9. Vorrichtung nach Anspruch 8 und wobei die Membran (43) gerillt ist, um die Möglichkeit zu erhöhen, daß Moleküle durch die Membran (43) ausgestoßen werden.

10. Vorrichtung nach einem der Ansprüche 5 bis 9 und wobei die Vorrichtung aufweist einen Hohlleiter (4a), durch den Kühlfluid hindurch geleitet werden kann, um während des Gebrauchs erzeugte Wärme zu entfernen.

11. Vorrichtung nach Anspruch 10 und wobei die Leitung (4a) eine Hohlwelle (4) aufweist, die im wesentlichen auf der Achse des Stators (7) angeordnet ist und sich zwischen den jeweiligen gegenüberliegenden Endwänden der Einfassung (3) erstreckt.

12. Vorrichtung nach einem der Ansprüche 5 bis 11 und wobei die Innenwand der Einfassung (3) eine Einrichtung aufweist, um das Material in dem Rotor (5) in dem Fall festzuhalten, daß der Rotor (5) in die Einfassung fällt, und zwar als Folge einer Fehlfunktion während des Gebrauchs.

13. Vorrichtung nach einem der vorhergehenden Ansprüche und wobei, um ein unmittelbar bevorstehendes Versagen des Rotors (5) in der Vorrichtung zu erfassen, die Vorrichtung aufweist eine Einrichtung zum Überwachen der Temperatur in der Kammer (1) oder des Rotors (5) und/oder zum Überwachen von Spannungsmustern, die in dem Körper des Rotors (5) entwickelt sind.

14. Vorrichtung nach Anspruch 13 und wobei faseroptische Führungen verwendet werden, um Temperaturen oder Spannungsmuster des Rotors (5) fernzuüberwachen.

15. Vorrichtung nach einem der vorhergehenden Ansprüche und wobei die Spule oder Spulen des Stators (7) verbunden sind mit einer externen Schaltung (12), welche ermöglicht, daß die Vorrichtung alternativ als elektrischer Generator oder als elektrischer Motor funktioniert, wobei die Schaltung (12) ermöglicht, daß eingehende elektrische Energie aufgebracht wird auf die Spulen, um als kinetische Energie durch den Rotor (5) gespeichert zu werden.

16. Vorrichtung nach einem der vorhergehenden Ansprüche und wobei der rohrförmige Körperabschnitt des Rotors (35, 39) ein Rohr aufweist, dessen Querschnittsfläche sich längs seiner Länge oder Teil seiner Länge ändert.

17. Vorrichtung nach einem der vorhergehenden Ansprüche und wobei der Spalt zwischen dem Rotor und Stator im wesentlichen konstant ist längs der Länge des Körperabschnitts des Rotors (5, 35, 39).

18. Vorrichtung nach einem der vorhergehenden Ansprüche, wobei die Anordnung des Rotors (5) und Stators (7) so beschaffen ist, daß die im Gebrauch zwischen den beiden erzeugten Magnetfeldern sich im wesentlichen orthogonal bzw. senkrecht zur Achse des Rotors (5) erstrecken.

## Revendications

1. Dispositif de conversion et de stockage d'énergie qui comprend un rotor magnétique (5) et un stator (7) comportant un ou plusieurs bobinages électriques, grâce auxquels une énergie électrique peut être appliquée au dispositif et extraite de celui-ci lorsque le rotor (5) tourne par rapport au stator (7), et des moyens (15, 17) destinés à suspendre électromagnétiquement le rotor (5) alors qu'il tourne par rapport au stator (7), dans lequel le rotor (5) comprend une partie de corps formée d'un composite de matériau renforcé par des fibres, et le stator (7) est disposé à l'intérieur du rotor (5) sur le même axe que le rotor (5), caractérisé en ce que la partie de corps du rotor (5) est tubulaire et présente une longueur, suivant son axe, qui est supérieure à son diamètre le plus large, un matériau magnétique est noyé dans le matériau renforcé par des fibres de la partie de corps du rotor (5), et le stator (7) s'étend sur au moins une majeure partie de la longueur de ladite partie de corps du rotor (5).

2. Dispositif selon la revendication 1 et dans lequel la longueur de la partie de corps fait face au stator (7) sur au moins 90 pour cent de la longueur du stator (7).

3. Dispositif selon la revendication 1 ou la revendication 2 et dans lequel le stator (7) est formé à l'aide d'un substrat comprenant un tube ou cylindre, soit coulé sous pression, soit fritté, soit extrudé, soit moulé, le substrat comprenant un matériau métallique dépourvu de fer ou un matériau polymère.

4. Dispositif selon la revendication 1, 2 ou 3 et dans lequel le stator (7) comporte des moyens qui lui sont associés grâce auxquels des particules de fer, suspendues dans un fluide qui peut être pompé, peuvent être injectées dans une cavité à l'intérieur du stator ou évacuées de celle-ci, d'où il résulte que la perméabilité du stator (7) peut être modifiée conformément à l'état d'excitation requis du dispositif.

5. Dispositif selon l'une quelconque des revendications précédentes et dans lequel le rotor (5) et le stator (7) sont contenus dans une enceinte (3) définissant une chambre (1) qui peut être vidée jusqu'à un état de vide poussé pendant l'utilisation, afin de minimiser la traînée moléculaire sur le rotor (5) et les pertes d'énergie parasites produites par celle-ci.

6. Dispositif selon la revendication 5 et dans lequel la chambre (1) comporte un agencement grâce auquel des molécules résiduelles peuvent être accélérées vers une membrane semi-perméable (43) et à travers celle-ci et être piégées dans une région (45b) de la chambre (1), derrière la membrane (43), pour favoriser, développer et maintenir le vide.

7. Dispositif selon la revendication 6 et dans lequel la membrane (43) comprend un matériau microporeux qui permet le passage de molécules de gaz à grande vitesse, mais ne permet pas leur transmission en retour à de faibles vitesses.

8. Dispositif selon la revendication 6 ou la revendication 7 et dans lequel la membrane semi-perméable (43) est prévue dans l'espace entre le rotor (5) et la paroi intérieure de l'enceinte (3), d'où il résulte que la membrane (43) peut être traversée pendant l'utilisation par des molécules de gaz résiduelles, projetées vers la membrane (43) par l'effet de rotation du rotor (5) et ensuite piégées dans la région entre la membrane (43) et la paroi intérieure de l'enceinte (3).

9. Dispositif selon la revendication 8 et dans lequel la membrane (43) est ondulée pour augmenter la probabilité qu'ont les molécules d'être projetées à travers la membrane (43).

10. Dispositif selon l'une quelconque des revendications 5 à 9 et dans lequel le dispositif comporte une conduite creuse (4a) à travers laquelle un fluide de refroidissement peut passer pour éliminer la chaleur générée pendant l'utilisation.

11. Dispositif selon la revendication 10 et dans lequel la conduite (4a) comprend un arbre creux (4) situé sensiblement sur l'axe du stator (7) et s'étendant entre les parois d'extrémité opposées respectives de l'enceinte (3).

12. Dispositif selon l'une quelconque des revendications 5 à 11 et dans lequel la paroi intérieure de l'enceinte (3) comprend des moyens destinés à arrêter le matériau du rotor (5) dans le cas où le rotor (5) se brise dans l'enceinte à la suite d'un défaut de fonctionnement pendant l'utilisation.

13. Dispositif selon l'une quelconque des revendications précédentes et dans lequel, pour détecter une défaillance imminente du rotor (5) dans le dispositif, le dispositif comporte des moyens destinés à surveiller la température dans ladite chambre (1) ou celle du rotor (5) et/ou destinés à surveiller les lignes de contraintes qui se développent dans le corps du rotor (5).

14. Dispositif selon la revendication 13 et dans lequel des guides à fibres optiques sont utilisés pour surveiller à distance les températures ou les lignes de contraintes du rotor (5).

15. Dispositif selon l'une quelconque des revendications précédentes et dans lequel le bobinage ou les bobinages du stator (7) sont reliés à un circuit de commutation externe (12) qui permet au dispositif de fonctionner en alternance en tant que génératrice électrique ou en tant que moteur électrique, le circuit de commutation (12) permettant que de l'énergie électrique en entrée soit appliquée aux bobinages pour être stockée sous forme d'énergie cinétique par le rotor (5).

16. Dispositif selon l'une quelconque des revendications précédentes et dans lequel ladite partie de corps tubulaire du rotor (35, 39) comprend un tube dont l'aire de la section transversale varie le long de sa longueur ou d'une partie de sa longueur.

17. Dispositif selon l'une quelconque des revendications précédentes et dans lequel l'interstice entre le rotor et le stator est sensiblement constant sur la longueur de ladite partie de corps du rotor (5, 35, 39).

18. Dispositif selon l'une quelconque des revendications précédentes et dans lequel l'agencement du rotor (5) et du stator (7) est tel que les champs magnétiques générés entre les deux, pendant l'utilisation, s'étendent sensiblement orthogonalement à l'axe du rotor (5).
